# EUROPEAN PATENT SPECIFICATION

(11) **EP 3 667 513 B1**
(45) Date of publication and mention of the grant of the patent: **21.02.2024**
(21) Application number: 19208819.3
(22) Date of filing: 13.11.2019
(51) Int. Cl.: G06F 16/28, G06Q 10/0639

(54) **AUTOMATED SUMMARIZED VIEW OF MULTI-DIMENSIONAL OBJECT IN ENTERPRISE DATA WAREHOUSING SYSTEMS**
AUTOMATISIERTE ZUSAMMENFASSUNG VON MEHRDIMENSIONALEN OBJEKTEN IN UNTERNEHMENS-DATA-WAREHOUSING-SYSTEMEN
VUE DE SYNTHÈSE AUTOMATISÉE D'UN OBJET MULTIDIMENSIONNEL DANS DES SYSTÈMES D'ENTREPOSAGE DE DONNÉES D'ENTREPRISE

(30) Priority: 14.12.2018 US 201816220044
(43) Date of publication of application: 17.06.2020
(73) Proprietor: Business Objects Software Ltd., Dublin 24 (IE)
(72) Inventor: TV, Ramalingam, 69190 Walldorf (DE); AMULU, James Michael, 69190 Walldorf (DE)
(74) Representative: Müller-Boré & Partner Patentanwälte PartG mbB

(56) References cited:
- US-A1- 2005 071 737
- US-A1- 2014 244 573

## Description

### BACKGROUND

Enterprise data warehousing (EDW) systems function as central repositories for enterprises, and store data from across multiple, disparate data systems. EDW systems also provide reporting and data analysis functionality. In general, EDW systems can be described as central repositories of integrated data from one or more disparate sources, which store current and historical data in one single place that are used for creating analytical reports. In some examples, EDW systems use star schema, also known as MDO (Multi-Dimensional Object), which is used to develop data warehouses and dimensional data marts. In some examples, a MDO includes one or more fact tables referencing any number of dimension tables. MDOs are a unique challenge to users in identifying relevance of an MDO on underlying data. This is because the multi-dimensional models underlying the MDOs are defined in a cryptic manner.

To make insights out of numerous MDOs (e.g., in the thousands), a model that is relevant to the user may not be available, or be difficult to discern. Although a new model can be created using existing MDOs, this adds to redundancy of information models, which consumes resources. Information accuracy is also questionable in such situations as the understanding of the model is limited to the user that created the model.

In EDW systems, numerous MDOs are provided, which are generally named in a cryptic manner including blank descriptions. This leads to a higher complexity in understanding the context of the available MDOs. To understand such MDOs, a dataflow is needed, and is consumed through a visualization tool to make sense of the context of the data. However, there is no single point solution available to understand the data in situations while addressing newer requirements. A common approach is to create all new MODs, even though the required MDOs already exist in the EDW system. This is redundant, and an inefficient use of resources.

Document US 2005/0071737 A1 discloses presenting business performance information to users by displaying a list of Key Performance Indicators (KPIs) having delta indication scores indicating changes in the KPIs, providing display options, receiving selection of a display option, and presenting performance information of the KPIs based on the selected display option.

Document US 2014/0244573 A1 discloses a data warehouse that includes a plurality of master data tables, a plurality of dimension tables and a fact table. The master data tables include surrogate identifiers. The dimension tables use the surrogate identifiers to link to the master data table domains within the master data tables. The fact table stores dimension identifiers that provide links to the master data tables. A cloud storage area includes a plurality of cloud dimension tables and a cloud fact table. Each cloud dimension table stores summary characteristics. Each cloud dimension table associates a separate cloud identifier with each entry of summary characteristics. The cloud fact table stores aggregated data representing key performance indicators. The cloud fact table includes a plurality of cloud identifier columns in which cloud identifiers are stored. Each cloud identifier column is dedicated to a single associated cloud dimension table from the plurality of cloud dimension tables, so that each cloud identifier column only stores cloud identifiers for a single cloud dimension table.

### SUMMARY

The claimed invention relates to a computer-implemented method and a system as defined in the independent claims. Exemplary embodiments are defined in the dependent claims. Implementations of the present disclosure are directed to accessing multi-dimensional objects (MDOs) in enterprise data warehousing (EDW) systems. More particularly, implementations of the present disclosure are directed to providing summarized views of MDOs in EDW systems.

In some implementations, actions include receiving, by a summarized view platform, a request for a summarized view, the request including one or more attributes, identifying, by the summarized view platform, a MDO within an EDW system based on the one or more attributes, receiving, by the summarized view platform, a query result including a set of values, and displaying, by the summarized view platform, the summarized view of the MDO, the summarized view including attributes of the MDO, at least one attribute being populated with a value of the set of values. Other implementations of this aspect include corresponding systems, apparatus, and computer programs, configured to perform the actions of the methods, encoded on computer storage devices.

These and other implementations can each optionally include one or more of the following features: the summarized view includes a hierarchy of attributes, at least one attribute including a key performance indicator (KPI) associated with the MDO; attributes of the MDO include two or more of context, domain, category, group, entity, and KPI; attributes of the MDO include a set of KPIs; actions further include receiving user input indicating selection of the summarized view, and, in response, providing the MDO for one or more of reporting and analytics; actions further include transmitting a query based on a context, the query result being provided in response to the query; the query is provided based on searchable attributes including one or more user-selected meta-data attributes.

The present disclosure also provides a computer-readable storage medium coupled to one or more processors and having instructions stored thereon which, when executed by the one or more processors, cause the one or more processors to perform operations in accordance with implementations of the methods provided herein.

The present disclosure further provides a system for implementing the methods provided herein. The system includes one or more processors, and a computer-readable storage medium coupled to the one or more processors having instructions stored thereon which, when executed by the one or more processors, cause the one or more processors to perform operations in accordance with implementations of the methods provided herein.

It is appreciated that methods in accordance with the present disclosure can include any combination of the aspects and features described herein. That is, methods in accordance with the present disclosure are not limited to the combinations of aspects and features specifically described herein, but also include any combination of the aspects and features provided.

The details of one or more implementations of the present disclosure are set forth in the accompanying drawings and the description below. Other features and advantages of the present disclosure will be apparent from the description and drawings, and from the claims.

### DESCRIPTION OF DRAWINGS

FIG. 1 depicts an example architecture that can be used to execute implementations of the present disclosure.
FIG. 2 depicts an example process that can be executed in accordance with implementations of the present disclosure.
FIG. 3 depicts an example process that can be executed in accordance with implementations of the present disclosure.
FIG. 4 is a schematic illustration of example computer systems that can be used to execute implementations of the present disclosure.

Like reference symbols in the various drawings indicate like elements.

### DETAILED DESCRIPTION

Implementations of the present disclosure are directed to accessing multi-dimensional objects (MDOs) in enterprise data warehousing (EDW) systems. More particularly, the claimed invention is directed to providing summarized views of MDOs in EDW systems. It includes actions of receiving, by a summarized view platform, a request for a summarized view, the request including one or more attributes, identifying, by the summarized view platform, a MDO within an EDW system based on the one or more attributes, receiving, by the summarized view platform, a query result including a set of values, and displaying, by the summarized view platform, the summarized view of the MDO, the summarized view including attributes of the MDO, at least one attribute being populated with a value of the set of values.

To provide further context for implementations of the present disclosure, and as introduced above, in EDW systems, numerous MDOs are provided, which are generally named in a cryptic manner including blank descriptions. This leads to a higher complexity in understanding the context of the available MDOs. To understand such MDOs, a dataflow is needed, and is consumed through a visualization tool to make sense of the context of the data. However, there is no single point solution available to understand the data in situations while addressing newer requirements. A common approach is to create all new MODs, even though the required MDOs already exist in the EDW system. This is redundant, and an inefficient use of resources.

This problem, if addressed in complete, will eliminate huge duplication effort, leaner EDW systems, and quicker turnaround time of any new MDO requirements by the user. The searchable attributes of MDO's using the underlying contextual data instead of ID and description, for example, will help users to narrow down the search from the EDW system. If the search results in a collection of MDO's of relevant objects, user will understand the context by opening each of the MDOs. A novel approach of concise summarization of MDOs with data insights will help users to work in an intelligent and efficient manner.

In view of the above context, the present disclosure provides a method and a system making use of a summarized view (SV) platform for context-sensitive, summarized views on the MDOs. As described in further detail herein, a context for a respective summarized view is identified either at the time of creation of an MDO, or by updating existing MDOs (e.g., sales, purchase, inventory, human resources (HR), logistics, manufacturing, product, finance, project, education, research and development (R&D), sports). In some implementations, the summarized view automatically detects the context based on one or more of underlying metadata, or a subset of data. In some implementations, the summarized view provides suggestions to users to help update in instances where context might be missing. In some examples, the context includes one or more key performance indicators (KPIs), which the user can define, and/or modify as required.

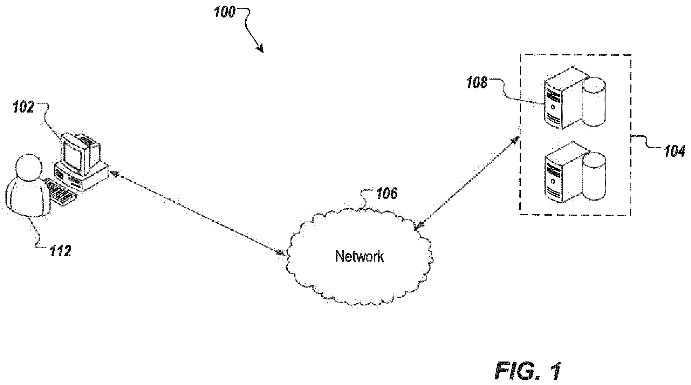

FIG. 1 depicts an example architecture 100 in accordance with implementations of the present disclosure. In the depicted example, the example architecture 100 includes a client device 102, a network 106, and a server system 104. The server system 104 includes one or more server devices and databases 108 (e.g., processors, memory). In the depicted example, a user 112 interacts with the client device 102.

In some examples, the client device 102 can communicate with the server system 104 over the network 106. In some examples, the client device 102 includes any appropriate type of computing device such as a desktop computer, a laptop computer, a handheld computer, a tablet computer, a personal digital assistant (PDA), a cellular telephone, a network appliance, a camera, a smart phone, an enhanced general packet radio service (EGPRS) mobile phone, a media player, a navigation device, an email device, a game console, or an appropriate combination of any two or more of these devices or other data processing devices. In some implementations, the network 106 can include a large computer network, such as a local area network (LAN), a wide area network (WAN), the Internet, a cellular network, a telephone network (e.g., PSTN) or an appropriate combination thereof connecting any number of communication devices, mobile computing devices, fixed computing devices and server systems.

In some implementations, the server system 104 includes at least one server and at least one data store. In the example of FIG. 1, the server system 104 is intended to represent various forms of servers including, but not limited to a web server, an application server, a proxy server, a network server, and/or a server pool. In general, server systems accept requests for application services and provides such services to any number of client devices (e.g., the client device 102 over the network 106).

In accordance with implementations of the present disclosure, and as noted above, the server system 104 hosts a SV platform that provides context-sensitive, summarized views on MDOs in accordance with implementations of the present disclosure. For example, the user 112 can submit one or more queries to the SV platform, which processes the queries to provide respective summarized views. The SV platform interacts with, or is included in a data warehousing system, such as an enterprise data warehousing (EDW) system. For example, the EDW system can be hosted on the server system 104, and can include the SV platform of the present disclosure. As another example, the EDW system can be hosted on a separate server system, and the SV platform communicates with the EDW system.

An example EDW system includes multiple layers, example layers including data source, staging, data warehousing, analytics, and user frontends. In some examples, the data source layer can include multiple, disparate data sources (e.g., customer relationship management (CRM), enterprise resource planning (ERP), supply chain management (SCM), legacy data sources). In some examples, the staging layer includes functionality (e.g., extract, transform, load (ETL)) to ingest data from the data source layer into the data warehousing layer. In some examples, the data warehousing layer includes raw data storage, and metadata storage. In some examples, the analytics layer includes functionality for analytics, reporting, and data mining (e.g., business intelligence, reports, dashboards, information delivery), which display analytical results, reports, and the like to users through the user frontend layer.

As introduced above, the present disclosure is directed to a method and a system making use of a SV platform that provides context-sensitive, summarized views on MDOs. More particularly, and as described in further detail herein, the SV platform of the present disclosure provides summarized views on MDOs in EDW systems. In some implementations, a summarized view of one or more MDOs is provided as a summarized snapshot of a set of KPIs on the data underlying the MDO(s). In some examples, the summarized view is generated relatively quickly, and enables users to make sense of multiple MODs (e.g., hundreds of MDOs). This is achieved in a relatively short span of planning time to build or reuse, to address a new request for analytics/reporting from users. Implementations of the present disclosure also help users understand the available information sources in the form of MDOs that are already available, and provisioned for analytics/reporting before requesting any new reports/KPIs/Analytics.

As a process, implementations of the present disclosure address the following example scenarios: the creation of new MDOs, and modifying existing MDOs to enable summarized views based thereon. In some implementations, data mining is used to provide sources of the MDOs, and provide recommendations to users on the context and the potentially relevant values in the form of KPIs that can be exposed in summarized views. In some examples, users can apply their own intuition in selecting and modifying the configurations. Implementations of the present disclosure can be realized using a relatively light-weight reporting object. In some examples, the reporting object provides a unified and consistent view of various MDOs, and the relevant enabled KPIs.

In accordance with implementations of the present disclosure, a summarized view of an MDO is provided at a view layer, instead of a reporting layer. In this manner, a user is able to determine whether the MDO is relevant to based on metadata of the MDO prior to going to the depth of the reporting layer. The user is able to view MDOs for relevance, and select a relevant MDO, if found. In this manner, implementations of the present disclosure can avoid redundant creations of MDOs (e.g., a user creating a new MDO, because it is unclear to the user whether the MDO is already available).

In some implementations, the summarized view depicts a context of an underlying MDO, and a set of KPIs relevant to the context. Example contexts can include, without limitation, sales, inventory, purchasing, and the like. In some examples, a summarized view is defined based on a hierarchy of attributes with the root of the hierarchy being the context. An example hierarchy can include, without limitation, context → domain -> category -7 group → entity -> KPI1 -> ... -> KPIn, where n is the number of KPIs in a set of KPIs to be included in the summarized view. In some examples, the number n is set to a maximum number (e.g., 10). In this manner, the information displayed in the summarized view itself does not become diluted. Using the example hierarchy above, an example summarized view can be provided as:

| **Transaction Data** |
|---|
| Inventory |
| Products |
| Electronic Goods |
| Mobile Phones |
| Stock Expected: 998 |
| Current Stock: 199 |
| Blocked Stock: 76 |
| Customer Orders On-Hand: 201 |
| Total Stock of All Restricted Batches: 20 |
| Stock in Quality Inspection: 92 |
| Stock In-transit: 29 |

### Example Summarized View

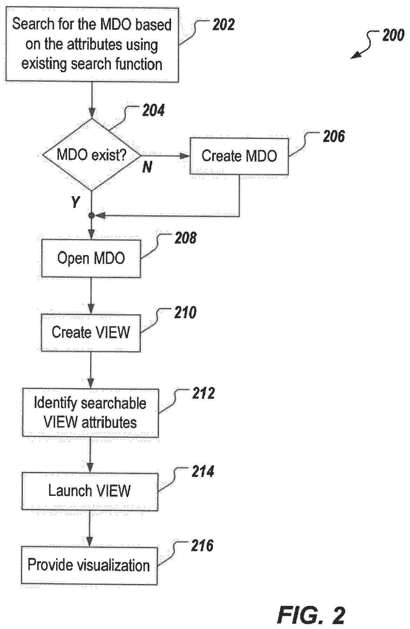

FIG. 2 depicts an example process 200 that can be executed in accordance with implementations of the present disclosure. In some examples, the example process 200 is provided using one or more computer-executable programs executed by one or more computing devices.

An MDO is searched for based on attributes (202). The SV platform of the present disclosure receives a request from a user for a summarized view. In some examples, the request includes one or more attributes (e.g., attribute(s) that the user is interested in). It is determined whether an MDO exists (204). The SV platform queries metadata of MDOs to determine whether any MDOs are responsive to the request. For example, if an MDO does not exist, an MDO is created (206). That is, if a existing MDO is not identified by the SV platform as being responsive to the request, an MDO is created.

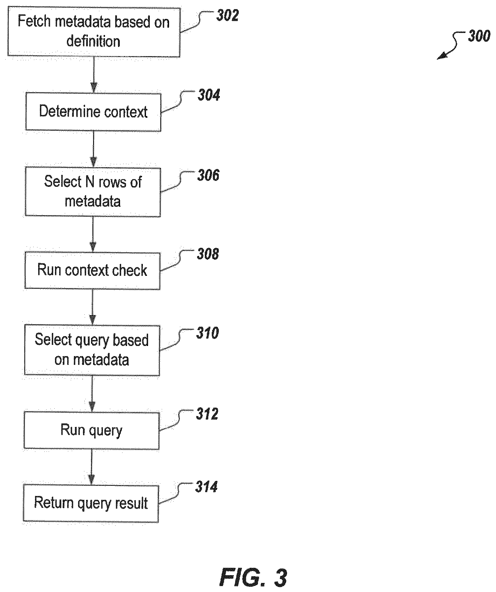

The MDO is opened (208), and a VIEW is created (210). For example, the MDO (e.g., either responsive to the request, or created) is opened in an edit mode. Searchable VIEW attributes are identified (212). In some examples, searchable VIEW attributes include user-selected meta-data attributes. The VIEW application is launched (214). Details of the view application are described in further detail below with reference to FIG. 3. A visualization is provided (216). For example, a summarized view of the MDO is displayed to the user, such as that example summarized view provided above. In some examples, the user can select the MDO for reporting, and/or analytics, if, for example, the user determined that the MDO is relevant. In some examples, the user can determine that the MDO is not relevant based on the summarized view, and can perform another search, or create a MDO that is needed.

FIG. 3 depicts an example process 300 that can be executed in accordance with implementations of the present disclosure. In some examples, the example process 300 is provided using one or more computer-executable programs executed by one or more computing devices. The example process 300 can be executed as part of launching the view application (e.g., 214 of FIG. 2).

Metadata is fetched based on the definition (302). Metadata corresponding to the MDO is retrieved from the data warehousing layer of the EDW system. A context is determined (304) based on metadata attributes. A number *n* rows of the metadata are selected (306). For example, and as described above, the number of KPIs (e.g., provided in the rows) is limited to avoid over-population, and thus dilution of the resulting summarizing view. A context check is run (308). A query is selected based on the metadata (310). The query is executed (312). A query result is returned (314).

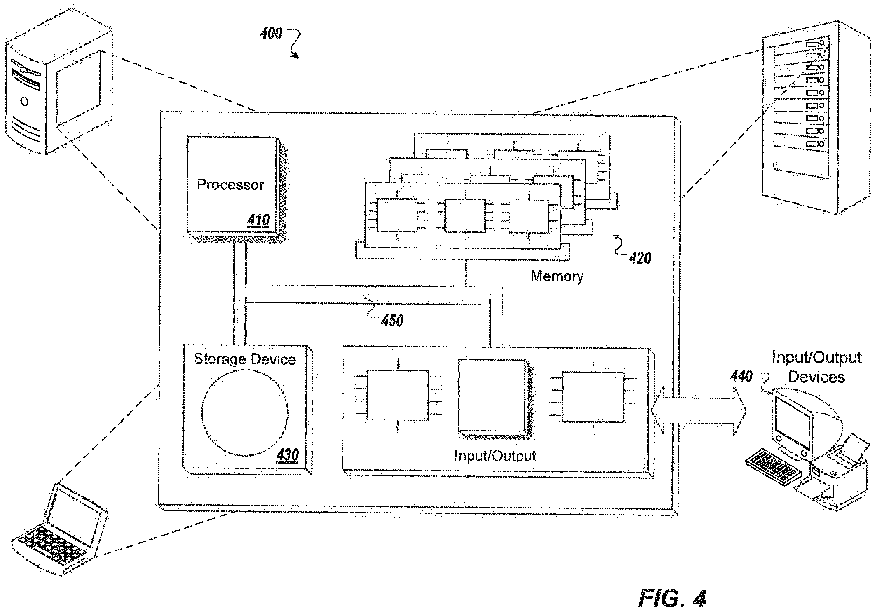

Referring now to FIG. 4, a schematic diagram of an example computing system 400 is provided. The system 400 can be used for the operations described in association with the implementations described herein. For example, the system 400 may be included in any or all of the server components discussed herein. The system 400 includes a processor 410, a memory 420, a storage device 430, and an input/output device 440. The components 410, 420, 430, 440 are interconnected using a system bus 450. The processor 410 is capable of processing instructions for execution within the system 400. In some implementations, the processor 410 is a single-threaded processor. In some implementations, the processor 410 is a multi-threaded processor. The processor 410 is capable of processing instructions stored in the memory 420 or on the storage device 430 to display graphical information for a user interface on the input/output device 440.

The memory 420 stores information within the system 400. In some implementations, the memory 420 is a computer-readable medium. In some implementations, the memory 420 is a volatile memory unit. In some implementations, the memory 420 is a non-volatile memory unit. The storage device 430 is capable of providing mass storage for the system 400. In some implementations, the storage device 430 is a computer-readable medium. In some implementations, the storage device 430 may be a floppy disk device, a hard disk device, an optical disk device, or a tape device. The input/output device 440 provides input/output operations for the system 400. In some implementations, the input/output device 440 includes a keyboard and/or pointing device. In some implementations, the input/output device 440 includes a display unit for displaying graphical user interfaces.

The features described can be implemented in digital electronic circuitry, or in computer hardware, firmware, software, or in combinations of them. The apparatus can be implemented in a computer program product tangibly embodied in an information carrier (e.g., in a machine-readable storage device, for execution by a programmable processor), and method steps can be performed by a programmable processor executing a program of instructions to perform functions of the described implementations by operating on input data and generating output. The described features can be implemented advantageously in one or more computer programs that are executable on a programmable system including at least one programmable processor coupled to receive data and instructions from, and to transmit data and instructions to, a data storage system, at least one input device, and at least one output device. A computer program is a set of instructions that can be used, directly or indirectly, in a computer to perform a certain activity or bring about a certain result. A computer program can be written in any form of programming language, including compiled or interpreted languages, and it can be deployed in any form, including as a stand-alone program or as a module, component, subroutine, or other unit suitable for use in a computing environment.

Suitable processors for the execution of a program of instructions include, by way of example, both general and special purpose microprocessors, and the sole processor or one of multiple processors of any kind of computer. Generally, a processor will receive instructions and data from a read-only memory or a random access memory or both. Elements of a computer can include a processor for executing instructions and one or more memories for storing instructions and data. Generally, a computer can also include, or be operatively coupled to communicate with, one or more mass storage devices for storing data files; such devices include magnetic disks, such as internal hard disks and removable disks; magneto-optical disks; and optical disks. Storage devices suitable for tangibly embodying computer program instructions and data include all forms of non-volatile memory, including by way of example semiconductor memory devices, such as EPROM, EEPROM, and flash memory devices; magnetic disks such as internal hard disks and removable disks; magneto-optical disks; and CD-ROM and DVD-ROM disks. The processor and the memory can be supplemented by, or incorporated in, ASICs (application-specific integrated circuits).

To provide for interaction with a user, the features can be implemented on a computer having a display device such as a CRT (cathode ray tube) or LCD (liquid crystal display) monitor for displaying information to the user and a keyboard and a pointing device such as a mouse or a trackball by which the user can provide input to the computer.

The features can be implemented in a computer system that includes a back-end component, such as a data server, or that includes a middleware component, such as an application server or an Internet server, or that includes a front-end component, such as a client computer having a graphical user interface or an Internet browser, or any combination of them. The components of the system can be connected by any form or medium of digital data communication such as a communication network. Examples of communication networks include, for example, a LAN, a WAN, and the computers and networks forming the Internet.

The computer system can include clients and servers. A client and server are generally remote from each other and typically interact through a network, such as the described one. The relationship of client and server arises by virtue of computer programs running on the respective computers and having a client-server relationship to each other.

In addition, the logic flows depicted in the figures do not require the particular order shown, or sequential order, to achieve desirable results. In addition, other steps may be provided, or steps may be eliminated, from the described flows, and other components may be added to, or removed from, the described systems.

A number of implementations of the present disclosure have been described. Nevertheless, it will be understood that various modifications may be made without departing from the scope of the present disclosure. Accordingly, the scope of the invention is defined by the following claims.

## Claims

1. A computer-implemented method for providing summarized views of multi-dimensional objects (MDOs) in enterprise data warehousing (EDW) systems (100, 400), the method being executed by one or more processors and comprising:
receiving, by a summarized view platform that is hosted on a server system (104) and that provides context-sensitive, summarized views on MDOs, a request from a user for a summarized view, the request comprising one or more attributes;
querying, by the summarized view platform, metadata of MDOs to determine whether any MDOs are responsive to the request;
identifying, by the summarized view platform, a MDO within an EDW system (100, 400) based on the one or more attributes;
opening the MDO and creating a VIEW;
launching a view application, wherein launching the view application comprises
retrieving metadata corresponding to the MDO from a warehousing layer of the EDW system (100, 400);
determining a context based on metadata attributes;
selecting a number of rows of the metadata;
running a context check;
selecting a query based on the metadata;
executing the query and returning a query result;
receiving, by the summarized view platform, the query result comprising a set of values; and
displaying, by the summarized view platform, the summarized view of the MDO, the summarized view comprising attributes of the MDO, at least one attribute being populated with a value of the set of values.

2. The method of claim 1, wherein the summarized view comprises a hierarchy of attributes, at least one attribute comprising a key performance indicator (KPI) associated with the MDO.

3. The method of claim 1 or 2, wherein attributes of the MDO comprise two or more of context, domain, category, group, entity, and KPI.

4. The method of any one of the preceding claims, wherein attributes of the MDO comprise a set of KPIs.

5. The method of any one of the preceding claims, further comprising receiving user input indicating selection of the summarized view, and, in response, providing the MDO for one or more of reporting and analytics.

6. The method of any one of the preceding claims, further comprising transmitting a query based on a context, the query result being provided in response to the query.

7. The method of claim 6, wherein the query is provided based on searchable attributes comprising one or more user-selected meta-data attributes.

8. A non-transitory computer-readable storage medium (420, 430) coupled to one or more processors (410) and having instructions stored thereon which, when executed by the one or more processors (410), cause the one or more processors (410) to perform operations according to the method of any one of the preceding claims 1 to 7.

9. A system (100, 400), comprising:
a computing device (410); and
a computer-readable storage device (420, 430) coupled to the computing device (410) and having instructions stored thereon which, when executed by the computing device (410), cause the computing device (410) to perform operations according to the method of any one of claims 1 to 7.

## Patentansprüche

1. Computerimplementiertes Verfahren zum Bereitstellen von zusammengefassten Ansichten von mehrdimensionalen Objekten (MDOs, Multi-Dimensional Objects) in unternehmensweiten Data-Warehousing (EDW, Enterprise Data Warehousing) -Systemen (100, 400), wobei das Verfahren von einem oder mehreren Prozessoren ausgeführt wird und umfasst:
Empfangen, durch eine Plattform für zusammengefasste Ansichten, die auf einem Serversystem (104) gehostet wird und die kontextabhängige, zusammengefasste Ansichten über MDOs bereitstellt, einer Anforderung von einem Benutzer für eine zusammengefasste Ansicht, wobei die Anforderung ein oder mehrere Attribute umfasst;
Abfragen, durch die Plattform für zusammengefasste Ansichten, der Metadaten von MDOs, um zu bestimmen, ob beliebige MDOs auf die Anforderung reagieren;
Identifizieren, durch die Plattform für zusammengefasste Ansichten, eines MDOs innerhalb eines EDW-Systems (100, 400) anhand des einen oder mehrerer Attribute;
Öffnen des MDOs und Erstellen einer ANSICHT;
Starten einer Ansichtsanwendung, wobei das Starten der Ansichtsanwendung umfasst
Abrufen von Metadaten, die dem MDO entsprechen, aus einer Warehousing-Schicht des EDW-Systems (100, 400);
Bestimmen eines Kontexts anhand von Metadatenattributen;
Auswählen einer Anzahl von Zeilen der Metadaten;
Durchführen einer Kontextprüfung;
Auswählen einer Abfrage anhand der Metadaten;
Ausführen der Abfrage und Rücksenden eines Abfrageergebnisses;
Empfangen, durch die Plattform für zusammengefasste Ansichten, des Abfrageergebnisses, umfassend einen Satz von Werten; und
Anzeigen, durch die Plattform für zusammengefasste Ansichten, der zusammengefassten Ansicht des MDOs, wobei die zusammengefasste Ansicht Attribute des MDOs umfasst, wobei zumindest ein Attribut mit einem Wert aus dem Satz von Werten belegt ist.

2. Verfahren nach Anspruch 1, wobei die zusammengefasste Ansicht eine Hierarchie von Attributen umfasst, wobei zumindest ein Attribut eine Leistungskennzahl (KPI, Key Performance Indicator) aufweist, die dem MDO zugeordnet ist.

3. Verfahren nach Anspruch 1 oder 2, wobei die Attribute des MDOs zwei oder mehr der folgenden Elemente aufweisen: Kontext, Domäne, Kategorie, Gruppe, Entität und KPI.

4. Verfahren nach einem der vorstehenden Ansprüche, wobei die Attribute des MDOs einen Satz von KPIs umfassen.

5. Verfahren nach einem der vorstehenden Ansprüche, ferner umfassend das Empfangen einer Benutzereingabe, welche die Auswahl der zusammengefassten Ansicht anzeigt, und als Reaktion darauf das Bereitstellen des MDOs für eine oder mehrere der Funktionen Berichterstattung und Analyse.

6. Verfahren nach einem der vorstehenden Ansprüche, ferner umfassend das Übertragen einer Abfrage anhand eines Kontexts, wobei das Abfrageergebnis als Reaktion auf die Abfrage bereitgestellt wird.

7. Verfahren nach Anspruch 6, wobei die Abfrage anhand von durchsuchbaren Attributen bereitgestellt wird, umfassend ein oder mehrere Metadatenattribute, die von dem Benutzer ausgewählt werden.

8. Nicht-flüchtiges computerlesbares Speichermedium (420, 430), das mit einem oder mehreren Prozessoren (410) gekoppelt ist und auf dem Befehle gespeichert sind, die, wenn sie von dem einen oder mehreren Prozessoren (410) ausgeführt werden, den einen oder mehrere Prozessoren (410) veranlassen, Vorgänge gemäß dem Verfahren nach einem der vorstehenden Ansprüche 1 bis 7 durchzuführen.

9. System (100, 400), aufweisend:
eine Rechenvorrichtung (410); und
eine computerlesbare Speichervorrichtung (420, 430), die mit der Rechenvorrichtung (410) gekoppelt ist und auf der Befehle gespeichert sind, die, wenn sie von der Rechenvorrichtung (410) ausgeführt werden, die Rechenvorrichtung (410) veranlassen, Vorgänge gemäß dem Verfahren nach einem der Ansprüche 1 bis 7 durchzuführen.

## Revendications

1. Procédé mis en oeuvre par ordinateur pour fournir des vues résumées d'objets multidimensionnels (MDO) dans des systèmes d'entreposage de données d'entreprise (EDW) (100, 400), le procédé étant exécuté par un ou plusieurs processeurs et comprenant :
la réception, par une plate-forme de vues résumées qui est hébergée sur un système de serveur (104) et qui fournit des vues résumées contextuelles sur les MDO, d'une requête d'un utilisateur pour une vue résumée, la requête comprenant un ou plusieurs attributs ;
l'interrogation, par la plate-forme de vues résumées, de métadonnées de MDO afin de déterminer si des MDO répondent à la requête ;
l'identification, par la plate-forme de vues résumées, d'un MDO au sein d'un système EDW (100, 400) sur la base des un ou plusieurs attributs ;
l'ouverture du MDO et la création d'une VUE ;
le lancement d'une application de vue, le lancement de l'application de vue comprenant
la récupération de métadonnées correspondant au MDO à partir d'une couche d'entreposage du système EDW (100, 400) ;
la détermination d'un contexte sur la base d'attributs de métadonnées ;
la sélection d'un nombre de lignes des métadonnées ;
la réalisation d'une vérification de contexte ;
la sélection d'une interrogation sur la base des métadonnées ;
l'exécution de l'interrogation et le renvoi d'un résultat d'interrogation ;
la réception, par la plate-forme de vues résumées, du résultat d'interrogation comprenant un ensemble de valeurs ; et
l'affichage, par la plate-forme de vues résumées, de la vue résumée du MDO, la vue résumée comprenant des attributs du MDO, au moins un attribut étant rempli avec une valeur de l'ensemble de valeurs.

2. Procédé selon la revendication 1, dans lequel la vue résumée comprend une hiérarchie d'attributs, au moins un attribut comprenant un indicateur clé de performance (KPI) associé au MDO.

3. Procédé selon la revendication 1 ou 2, dans lequel les attributs du MDO comprennent deux éléments ou plus parmi le contexte, le domaine, la catégorie, le groupe, l'entité et le KPI.

4. Procédé selon l'une quelconque des revendications précédentes, dans lequel les attributs du MDO comprennent un ensemble de KPI.

5. Procédé selon l'une quelconque des revendications précédentes, comprenant en outre la réception d'une entrée utilisateur indiquant la sélection de la vue résumée et, en réponse, la fourniture du MDO pour un ou plusieurs éléments parmi un rapport et une analyse.

6. Procédé selon l'une quelconque des revendications précédentes, comprenant en outre la transmission d'une interrogation basée sur un contexte, le résultat d'interrogation étant fourni en réponse à l'interrogation.

7. Procédé selon la revendication 6, dans lequel l'interrogation est fournie sur la base d'attributs consultables comprenant un ou plusieurs attributs de métadonnées sélectionnés par l'utilisateur.

8. Support de stockage non transitoire lisible par ordinateur (420, 430) couplé à un ou plusieurs processeurs (410) et comportant des instructions stockées sur celui-ci qui, lorsqu'elles sont exécutées par les un ou plusieurs processeurs (410), amènent les un ou plusieurs processeurs (410) à effectuer des opérations conformément au procédé selon l'une quelconque des revendications 1 à 7 précédentes.

9. Système (100, 400), comprenant :
un dispositif informatique (410) ; et
un dispositif de stockage lisible par ordinateur (420, 430) couplé au dispositif informatique (410) et comportant des instructions stockées sur celui-ci qui, lorsqu'elles sont exécutées par le dispositif informatique (410), amènent le dispositif informatique (410) à effectuer des opérations conformément au procédé selon l'une quelconque des revendications 1 à 7.
